# EUROPEAN PATENT SPECIFICATION

(11) **EP 1 491 365 B1**
(45) Date of publication and mention of the grant of the patent: **29.02.2012**
(21) Application number: 04102687.3
(22) Date of filing: 14.06.2004
(51) Int. Cl.: B60C 9/00, C08J 5/06

(54) **Polyester cords and their use in runflat tires**
Polyesterkord und dessen Verwendung in Notlaufreifen
Cable polyester et utilisation pour pneumatiques à mobilité étendue

(30) Priority: 27.06.2003 US 609165
(43) Date of publication of application: 29.12.2004
(73) Proprietor: The Goodyear Tire & Rubber Company, Akron, OH 44316-0001 (US)
(72) Inventor: Imhoff, Serge Julien Auguste, L-9184 Schrondweiler (LU); Goksoy, Mustafa, L-9357 Bettendorf (LU); Reuter, René François, L-9142 Burden (LU); Donckels, Yves, B-5360 Natove (BE); Philpott, Frank, L-5465 Waldbredimus (LU)
(74) Representative: Kutsch, Bernd

(56) References cited:
- EP-A- 1 442 900
- WO-A-01/14461
- GB-A- 1 106 920
- US-A- 3 387 996
- US-A- 6 135 181

## Description

### Technical Field

The present invention is directed to a polyester cord and its use in a runflat pneumatic tire. The cord is treated with a polyepoxide, wherein the polyepoxide is applied to the cord after twist of the polyester yarn to form the cord. The cord may subsequently be treated in a second step with an RFL.

### Background

In general, the term "runflat" when applied to a tire, means that the tire structure alone has sufficient strength to support the vehicle load when the tire is operated in the uninflated condition. That is, the sidewall and internal surfaces of the tire do not collapse or buckle onto themselves in the extreme manner associated with conventional tires that are uninflated. Current runflat design is directed toward providing rigid sidewalls and crown structures, rather than to the incorporation of internal supporting structures and devices to prevent the tire from collapsing. Due to the large amounts of rubber required to stiffen the sidewall members, heat build-up is a major factor in tire failure. Design consideration is also often given to the strengthening of the crown region, enabling such to cooperate with the stiffened sidewall members and improving thereby substantially the runflat properties.

US-A- 5,368,082 teaches the employment of special sidewall inserts to improve stiffness. Approximately six additional pounds of weight per tire were required to support an 800 lb, load in this uninflated tire. These runflat tires had a very low aspect ratio. This earlier invention although superior to prior attempts still imposed a weight penalty per tire that could only be offset partly by the elimination of the spare tire and the tire jack.

US-A- 5,427,166 and 5,511,599 disclose the addition of a third ply and an addition of a third insert in the sidewall to further increase the runflat performance of the tire over pre-mentioned US-A- 5,368,082. US-A- 5,535,800 discloses the use of elastomeric covered composite ribs that in combination with a radial ply can provide excellent runflat capability in a wide range of tire applications.

In US-A- 5,361,820, a pneumatic radial tire is disclosed that has a shoulder insert and an apex envelope by a single ply that has its turnup extended to end directly under the edge of one belt reinforcement. The tire although not a runflat tire demonstrates that beneficial weight reductions can be achieved with a nominal loss of high performance handling. The employment of such a structure in a runflat tire has not been applied successfully due to the unique design requirements. WO-A- 98/54010 discloses a runflat tire using a few as one ply and two inserts per sidewall while still being able to keep the tire intact during runflat conditions. This enables the tire to be very efficiently produced with a lighter weight and fewer components.

Whatever the construction of a tire, heat build-up is a major factor in its failure. This is especially true when a runflat tire is operated for prolonged periods at high speeds in severely underinflated condition. The extreme temperature conditions have deleterious effects on the components of the tire.

State of the art runflat tires use rayon as carcass reinforcement. The use of PET polyester treated tire cords in runflat carcass applications has been evaluated in the past with poor results, particularly in runflat mileage, due to excessive heat build up. Such is the case not only for the tire carcass, but also the belts and other inserts of textile cords where the high temperatures are detrimental to the adhesion between the cord and the rubber coat. In particular, the ability for PET polyester treated-cords to sustain an adequate interfacial bonding strength when subject to very high temperature is unsatisfactory. This poorer than desired bonding strength may occur between the adhesive/polyester surface or may peel off the polyester surface. In either case, the resultant appearance of the treated-cord is unsatisfactory, i.e. white, little presence of adhesive/elastomer along the surface.

In order to facilitate the high temperature interfacial strength, between the polyester surface and the adhesive/elastomer, one needs to increase the polyesters surface reactivity. It is felt that this can be achieved through several unique approaches: use of surface treatments (e.g. corona, plasma etc.) to further improve surface reactivity and/or mechanical bonding sites and/or develop an improved spin finish/coating which could act as a thermal barrier to degradation (e.g. higher epoxy based over finish content on the fiber surface).

It is an object of the invention to improve the interfacial strength of polyester cords in rubber and more specifically such strength at elevated temperatures.

It is a further object of the invention to provide a low cost tire having runflat properties comparable to a tire having a rayon carcass.

EP-A- 1 442 900 describes an agricultural or industrial tire with polyester cords wherein the polyester cords are formed by twisting together with a plurality of polyester yarns and treating the twisted polyester yarns with an aqueous emulsion comprising a polyepoxide.

GB-A- 1,106,920 describes polyester-fiber-reinforced elastomeric articles such as bias tires comprising cords of polyester formed by twisting together a plurality of polyester yarns and treating the twisted polyester yarns with an aqueous emulsion comprising a polyepoxide. A similar approach is also described in US-A- 3,387, 996.

WO-A- 01/14461 describes a process for producing an adhesive-treated polyester fiber cord for use in a power-transmission belt.

US-A-6,135,181 is considered to be the most relevant prior art to the subject-matter of claim 1 and discloses a pneumatic radial runflat tire having a tread, a belt structure comprising two belt plies and a carcass comprising two sidewalls, two beads, at least one radial carcass ply and at least one wedge insert in each sidewall, wherein the reinforcing elements in the carcass reinforcing plies of the tire may include reinforcing cords of polyester formed by twisting together a plurality of polyester yarns.

### Summary

The present invention provides a runflat tire including polyester cords as defined in the claims.

The invention teaches to use a dip adhesive with a sub-coat featuring a higher amount of epoxy. In a preferred embodiment, the dip adhesive also comprises a topcoat of RFL including a blocked isocyanate.

In one aspect, the invention is directed towards a pneumatic runflat tire comprising a casing having at least one component reinforced with polyester cord having a polyepoxide disposed on a surface of said cord, a rubber tread disposed radially outwardly of the casing. The polyester cord is formed by first obtaining a cord through twisting together a plurality of polyester yarns, secondly treating the cord with an aqueous dispersion comprising a polyepoxide, and thirdly treating the cord with an aqueous RFL dispersion comprising a resorcinol-formaldehyde resin, a styrene-butadiene copolymer latex, a vinylpyridine-styrene-butadiene terpolymer latex, and a blocked isocyanate.

Since polyester is about 30% less expensive (per Kg) compared to rayon, the ability to use polyester has a commercial advantage. In addition as opposed to rayon, polyester is in large supply and available in all major regions of the world. "Polyester" as used in this invention includes polyethylene terephthalate (PET) and polyethylene naphthalate (PEN).

### Brief Description of the Drawings

The following is a brief description of the drawings in which like parts bear like reference numerals and in which:
Figure 1 is a cross-sectional view of a tire according to the invention;.
Figure 2 is a cross-sectional view of a further tire according to the invention; and
Figure 3 is a cross-sectional view of a still further tire according to the invention.

### Definitions

"Bead" or "Bead Core" means generally that part of the tire comprising an annular tensile member, the radially inner beads are associated with holding the tire to the rim being wrapped by ply cords and shaped, with or without other reinforcement elements such as flippers, chippers, apexes or fillers, toe guards and chafers.

"Belt Structure" or "Reinforcing Belts" means at least two annular layers or plies of parallel cords, woven or unwoven, underlying the tread, unanchored to the bead, and having both left and right cord angles preferably in the range from 17° to 27° with respect to the equatorial plane of the tire.

"Circumferential" means lines or directions extending along the perimeter of the surface of the annular tread perpendicular to the axial direction.

"Carcass" means the tire structure apart from the belt structure, tread, and undertread, but including the beads.

"Casing" means the carcass, belt structure, beads, sidewalls and all other components of the tire excepting the tread and undertread.

"Cord" means one of the reinforcement strands of which the plies in the tire are comprised.

"Equatorial Plane (EP)" means the plane perpendicular to the tire's axis of rotation and passing through the center of its tread.

"Ply" means a layer of rubber-coated parallel cords.

"Radial" and "radially" mean directions radially toward or away from the axis of rotation of the tire.

"Radial Ply Tire" means a belted or circumferentially-restricted pneumatic tire in which at least one ply has cords which extend from bead to bead are laid at cord angles preferably between 65° and 90° with respect to the equatorial plane of the tire.

### Description

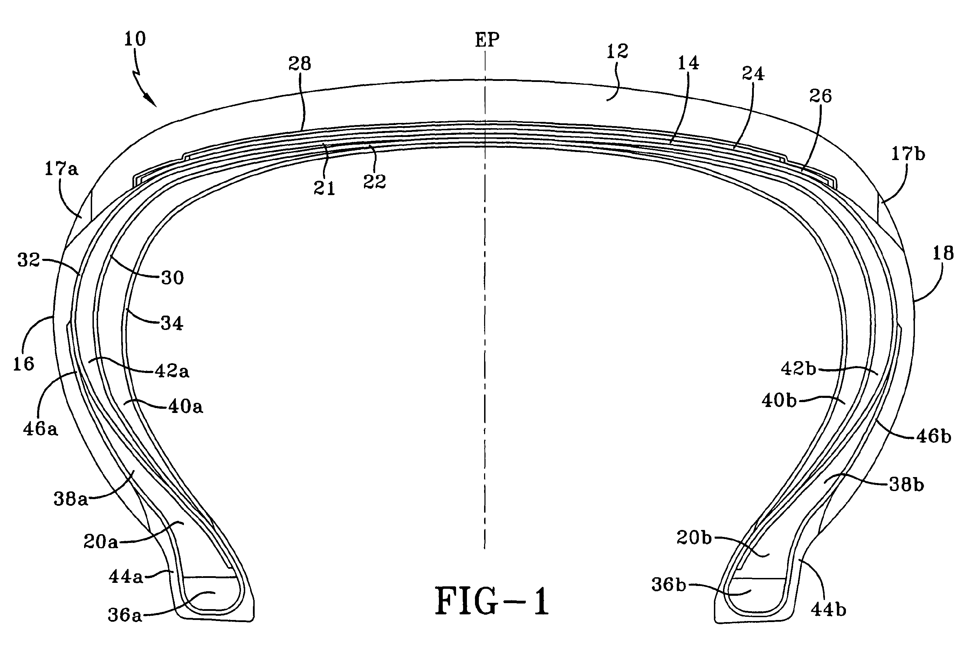

With reference to Figure 1, a cross section of a multiple-insert pneumatic radial runflat tire 10 is illustrated. The tire 10 has a tread cap 12, a belt structure 14 comprising belts 24, 26, a pair of sidewall portions 16, 18, a pair of transition regions 17a, 17b wherein the tread cap 12 smoothly transitions into the sidewall portions 16, 18, respectively, a pair of bead regions 20a, 20b, a carcass 21 with a ply structure 22, and a fabric overlay 28 deployed between the bottom portion of the tread cap 12 and the upper parts of the belt structure 14. The carcass 21 comprises the ply structure 22 having a first ply 30 and second ply 32, a gas-impervious inner liner 34, a pair of beads 36a, 36b, a pair of bead filler apexes 38a, 38b, a first pair of sidewall wedge inserts 40a, 40b, and a second pair of sidewall wedge inserts 42a, 42b. The first or innermost wedge insert 40a, 40b is located between the inner liner 34 and the first ply 30, and the second wedge insert 42a, 42b is located between the first ply 30 and the second ply 32. The fabric overlay 28 is disposed beneath, or radially inward of, tread cap 12 and on top of, or radially outward from, belt structure 14. The fabric overlay 28 is reinforced with the polyester cords according to the invention (comparative example). It consists of a helically wound ribbon which is laid at an inclination angle comprised between zero and five degrees with respect to the equatorial plane of the tire. The innermost ply 30 wraps around the beads 36a, 36b and has turnup ends 46a, 46b that extend well out into the sidewall portions 16, 18, respectively. The reinforced sidewall portions 16, 18 include chafers 44a, 44b that protect the underlying ply structure 22 from abrasion against a wheel rim (not shown). The sidewall portions 16, 18 of ply structure 22 give the tire 10 a limited runflat capability. The structural reinforcement in the sidewall area of the tire 10 substantially increases the overall thickness of the sidewall portions 16, 18, particularly in the middle of the sidewalls 16, 18 where the wedge inserts 40a, 40b, 42a, 42b are thickest.

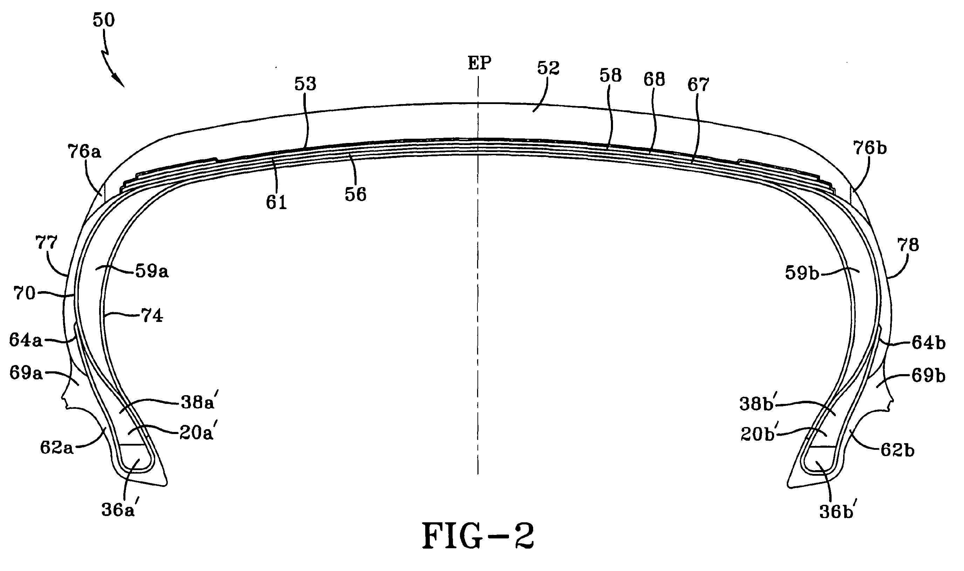

Figure 2 shows a cross-sectional view of a typical single-insert pneumatic radial runflat tire 50. The tire 50 differs from the multiple-insert tire 10 of Figure 1 in several ways: for example, it has only a single wedge insert 59a, 59b in each sidewall 77, 78, respectively; and the ply structure 56 consists of a single ply 70. The fabric single ply 70 is reinforced with the polyester cords according to the invention. The polyester cords as described in connection with Figure 2 are of the construction 1440/2, twisted 7Z/9S turns per inch or TPI (meaning that two yarns of 1440 dtex polyester are each twisted 7 TPI in the Z direction and the two yarns receive a cord twist of 9 TPI in the S direction) and have a lateral density of 32 ends per inch or EPI after calendering.

The direction of twist refers to the direction of slope of the spirals of a yarn or cord when it is held vertically. If the slope of the spirals conform in direction to the slope of the letter "S", then the twist is called "S" or "left hand". If the slope of the spirals conform in direction to the slope of the letter "Z", then the twist is called "Z" or "right hand". An "S" or "left hand" twist direction is understood to be an opposite direction from a "Z" or "right hand" twist. "Yarn twist" is understood to mean the twist imparted to a yarn before the yarn is incorporated into a cord, and "cord twist" is understood to mean the twist imparted to two or more yarns when they are twisted together with one another to form a cord. "dtex" is understood to mean the weight in grams of 10,000 meters of a yarn before the yarn has a twist imparted thereto.

Tire 50 otherwise shares similarities in structure with the tire 10 of Figure 1. The tire 50 has a tread cap 52, a pair of sidewall portions 77, 78, a pair of transition regions 76a, 76b wherein the tread cap 52 smoothly transitions into the sidewall portions 77, 78, respectively, a pair of bead regions 20a', 20b', a belt structure 58 comprising two belts 67, 68 and a fabric overlay 53 deployed between the bottom portion of tread cap 52 and the upper, or radially outermost, parts of the belt structure 58. A carcass 61 comprises the ply structure 56 having the single ply 70, a gas-impervious inner liner 74, a pair of beads 36a', 36b', and a pair of bead filler apexes 38a', 38b'. The single wedge insert 59a, 59b in each sidewall portion 77, 78, respectively, is located between the inner liner 74 and the single ply 70. The ply 70 has turnup ends 64a, 64b that extend well out into the sidewall portions 77, 78, respectively. The reinforced sidewall portions 77, 78 include chafers 62a, 62b and rim flange protectors 69a, 69b (also known as wheel-rim retainer lips). The rim flange protectors 69a, 69b maintain the tire upon a wheel rim (not shown) during runflat operation, while the chafers 62a, 62b protect the underlying ply structure 56 from abrasion against the wheel rim. The reinforced sidewall portions 77, 78 of ply structure 56 give the tire 50 a limited runflat capability. As can be seen from Figure 2, the structural reinforcement in the sidewall area of the tire 50 substantially increases the overall thickness of the sidewall portions 77, 78, particularly in the transition regions.

The runflat tire designs 10, 50 show the more or less uniformly thickened sidewalls that are necessary to support the tire's load with minimal sidewall deflection when the runflat tire 10, 50 is in an uninflated state. Such runflat tire designs provide good vehicle handling and performance under conditions of full inflation, and they yield acceptable runflat vehicle handling and runflat operational life when the tire is uninflated.

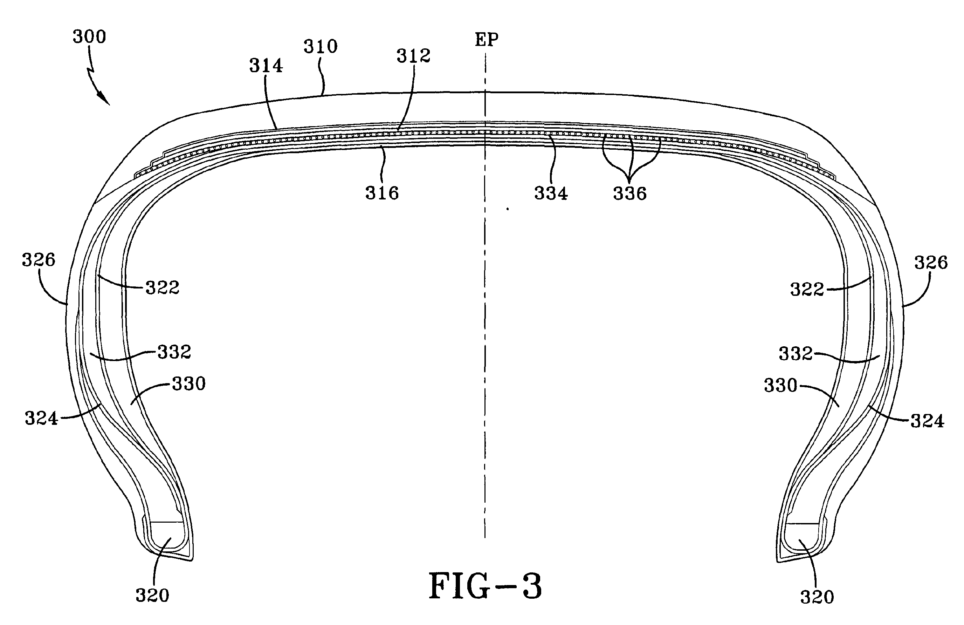

Figure 3 shows a cross section of a further pneumatic radial runflat tire 300. The tire 300 has a tread 310, a belt structure 312 comprising one or more belts, a fabric overlay 314 over the belts 312, a fabric underlay 334 under the belts 312 and a carcass 316 under the underlay 334. The fabric underlay, between the belts and radial plies stiffens the tread by widening the gap between the belts and plies. The fabric underlay is reinforced by polyester cords 336 according to the invention (comparative example) that are wound at an angle comprised between zero and five degrees with respect to the equatorial plane (EP) of the tire.

The carcass has two inextensible annular beads 320, an inner radial ply 322, an outer radial ply 324 and two sidewalls 326 each reinforced with an inner wedge insert 330 and an outer wedge insert 332 which give the tire 300 a limited runflat capability. The structural reinforcement in the sidewall area of the tire 300 substantially increases the overall thickness of the sidewalls 326 in order to support the tire's load with minimal sidewall deformation in runflat operation. Such runflat tire designs provide reasonable, though not ideal, vehicle handling and performance in normal inflated operation and reasonable tire life and vehicle handling in runflat operation. Runflat tires generally weigh more than equivalent non-runflat tires because of the additional weight of the reinforcement material in the sidewalls. This problematic additional weight is generally greater in high-profile runflat tires because of the need for larger inserts in the larger sidewalls.

It should be apparent that the represented runflat tire designs 10, 50, 300 are merely representative of a wide range of runflat tire designs that are generally characterized by sidewall stiffening devices comprising at least one insert placed in each sidewall among at least one ply of the radial ply structure. It should be further understood that the sidewall stiffening devices may also include other elements, for example, such as fabric strips (not illustrated), wavy cords or fibers.

According to the invention at least one of the reinforcement elements in the carcass reinforcing plies includes a polyester cord. Such is formed by
- first obtaining a cord through twisting together a plurality of polyester yarns;
- secondly treating the cord with an aqueous dispersion comprising a polyepoxide; and
- thirdly preferably treating the cord with an aqueous RFL dispersion comprising a resorcinol-formaldehyde resin, a styrene-butadiene copolymer latex, a vinylpyridine-styrene-butadiene terpolymer latex, and a blocked isocyanate.

The ply component itself is conventionally a multiple cord-reinforced component where the cords are embedded in a rubber composition which is usually referred to as a ply coat. The ply coat rubber composition is conventionally applied by calendering the rubber onto the multiplicity of cords as they pass over, around and through relatively large, heated, rotating, metal cylindrical rolls. Such ply component of a tire, as well as the calendering method of applying the rubber composition ply coat, are well known to those having skill in such art.

In practice, cords of various compositions may be used for the carcass ply or belts such as, for example, but not intended to be limiting polyester, rayon, aramid and nylon. Such cords and their construction, whether monofilament or as twisted filaments, are well known to those having skill in such art. In particular, polyester cords are desirable for use in runflat tires because of their good properties and relatively low cost. However, as has been discussed herein, adhesion between the ply coat and polyester cord in runflat tires has heretofore been less than adequate.

It has now been found that treatment of polyester cord with a treatment subsequent to twisting of the polyester yarns into cord provides for improved adhesion between the polyester and ply coat in a runflat tire.

The treatment of the polyester cord comprises treating the cord after twist of the yarn with an aqueous emulsion comprising a polyepoxide, followed by treating the cord with an aqueous RFL emulsion comprising a resorcinol-formaldehyde resin, a styrene-butadiene copolymer latex, a vinylpyridine-styrene-butadiene terpolymer latex, and a blocked isocyanate.

The polyester cord used in the carcass ply and, underlay or overlay may be made from any polyester fiber suitable for use in a tire as is known in the art. Polyester cords yarns are typically produced as multi-filament bundles by extrusion of the filaments from a polymer melt. Polyester cord is produced by drawing polyester fiber into yarns comprising a plurality of the fibers, followed by twisting a plurality of these yarns into a cord. Such yarns may be treated with a spin-finish to protect the filaments from fretting against each other and against machine equipment to ensure good mechanical properties. In some cases the yarn may be top-coated with a so-called adhesion activator prior to twisting the yarn into cord. The polyester may also be treated with an RFL (Resorcinol-Formaldehyde-Latex) dip after twisting the yarn into cord. The adhesion activator, typically comprising a polyepoxide, serves to improve adhesion of the polyester cord to rubber compounds after it is dipped with an RFL dip. Such dip systems are not robust against long and high temperature cures in compounds that contain traces of humidity and amines which attack the cord filament skin and degrade the adhesive / cord interface. The typical sign of failure is a nude polyester cord showing only traces of adhesive left on it.

In contrast to the prior art technique, in the present invention the polyester is treated with polyepoxide after the polyester yarns are twisted into cords. The twisted cords are dipped in an aqueous dispersion of a polyepoxide, also referred to herein as an epoxy or epoxy compound. The polyester cord may be formed from yarns that have been treated with sizing or adhesives prior to twist. Thus, cords made using conventional adhesive activated yarns, i.e., yarns treated with adhesive prior to twist, may be subsequently treated using the current methods.

As a polyepoxide, use may be made of reaction products between an aliphatic polyalcohol such as glycerine, propylene glycol, ethylene glycol, hexane triol, sorbitol, trimethylol propane, 3-methylpentanetriol, poly(ethylene glycol), poly(propylene glycol) etc. and a halohydrine such as epichlorohydrin, reaction products between an aromatic polyalcohol such as resorcinol, phenol, hydroquinoline, phloroglucinol bis(4-hydroxyphenyl)methane and a halohydrin, reaction products between a novolac type phenolic resin such as a novolac type phenolic resin, or a novolac type resorcinol resin and halohydrin. In one embodiment, the polyepoxide is derived from an ortho-cresol formaldehyde novolac resin.

The polyepoxide is used as an aqueous dispersion of a fine particle polyepoxide. In one embodiment, the polyepoxide is present in the aqueous dispersion in a concentration range of from 1 to 5 percent by weight. In another embodiment, the polyepoxide is present in the aqueous dispersion in a concentration range of from 1 to 3 percent by weight.

In a first treatment step, dry polyester cord is dipped in the aqueous polyepoxide dispersion. The cord is dipped for a time sufficient to allow a dip pick up, or DPU, of between 0.3 and 0.7 percent by weight of polyepoxide. In another embodiment, the DPU is between 0.4 and 0.6 percent by weight. The DPU is defined as the dipped cord weight (after drying or curing of the dipped cord) minus the undipped cord weight, then divided by the undipped cord weight.

The polyester cord may be treated in the aqueous polyepoxide dispersion in a continuous process by drawing the cord through a dispersion bath, or by soaking the cord in batch. After dipping in the polyepoxide dispersion, the cord is dried or cured to remove the excess water, using methods as are known in the art.

In a second treatment step, the polyepoxide treated polyester cord is dipped in a modified RFL (resorcinol-formaldehyde-latex) liquid. The adhesive composition is comprised of (1) resorcinol, (2) formaldehyde and (3) a styrene-butadiene rubber latex, (4) a vinylpyridine-styrene-butadiene terpolymer latex, and (5) a blocked isocyanate. The resorcinol reacts with formaldehyde to produce a resorcinol-formaldehyde reaction product. This reaction product is the result of a condensation reaction between a phenol group on the resorcinol and the aldehyde group on the formaldehyde. Resorcinol resoles and resorcinol-phenol resoles, whether formed in situ within the latex or formed separately in aqueous solution, are considerably superior to other condensation products in the adhesive mixture.

The resorcinol may be dissolved in water to which around 37 percent formaldehyde has been added together with a strong base such as sodium hydroxide. The strong base should generally constitute around 7.5 percent or less of the resorcinol, and the molar ratio of the formaldehyde to resorcinol should be in a range of from 1.5 to 2. The aqueous solution of the resole or condensation product or resin is mixed with the styrene-butadiene latex and vinylpyridine-styrene-butadiene terpolymer latex. The resole or other mentioned condensation product or materials that form said condensation product should constitute from 5 to 40 parts and preferably around 10 to 28 parts by solids of the latex mixture. The condensation product forming the resole or resole type resin forming materials should preferably be partially reacted or reacted so as to be only partially soluble in water. Sufficient water is then preferably added to give around 12 percent to 18 percent by weight overall solids in the final dip. The weight ratio of the polymeric solids from the latex to the resorcinol/formaldehyde resin should be in a range of 2 to 6.

The RFL adhesive also includes a blocked isocyanate. In one embodiment from 1 to 8 parts by weight of solids of blocked isocyanate is added to the adhesive. The blocked isocyanate may be any suitable blocked isocyanate known to be used in RFL adhesive dips, including but not limited to caprolactam blocked methylene-bis-(4-phenylisocyanate), such as Grilbond-IL6 available from EMS American Grilon, Inc., and phenol formaldehyde blocked isocyanates as disclosed in US-A- 3,226,276, 3,268,467; and 3,298,984. As a blocked isocyanate, use may be made of reaction products between one or more isocyanates and one or more kinds of isocyanate blocking agents. The isocyanates include monoisocyanates such as phenyl isocyanate, dichlorophenyl isocyanate and naphthalene monoisocyanate, diisocyanate such as tolylene diisocyanate, dianisidine diisocyanate, hexamethylene diisocyanate, m-phenylene diisocyanate, tetramethylene diisocyante, alkylbenzene diisocyanate, m-xylene diisocyanate, cyclohexylmethane diisocyanate, 3,3-dimethoxyphenylmethane-4,4'-diisocyanate, 1-alkoxybenzene-2,4-diisocyanate, ethylene diisocyanate, propylene diisocyanate, cyclohexylene-1,2-diisocyanate, diphenylene diisocyanate, butylene-1,2-diisocyanate, diphenylmethane-4,4diisocyanate, diphenylethane diisocyanate, 1,5-naphthalene diisocyanate, etc., and triisocyanates such as triphenylmethane triisocyanate, diphenylmethane triisocyanate, etc. The isocyanate-blocking agents include phenols such as phenol, cresol, and resorcinol, tertiary alcohols such as t-butanol and t-pentanol, aromatic amines such as diphenylamine, diphenylnaphthylamine and xylidine, ethyleneimines such as ethylene imine and propyleneimine, imides such as succinic acid imide, and phthalimide, lactams such as ε.-caprolactam, δ-valerolactam, and butyrolactam, ureas such as urea and diethylene urea, oximes such as acetoxime, cyclohexanoxime, benzophenon oxime, and α-pyrolidon.

The polymers may be added in the form of a latex or otherwise. In one embodiment, a vinylpyridine-styrene-butadiene terpolymer latex and styrene-butadiene rubber latex may be added to the RFL adhesive. The vinylpyridiene-styrene-butadiene terpolymer may be present in the RFL adhesive such that the solids weight of the vinylpyridiene-styrene-butadiene terpolymer is from 50 percent to 100 percent of the solids weight of the styrene-butadiene rubber; in other words, the weight ratio of vinylpyridiene-styrene-butadiene terpolymer to styrene-butadiene rubber is from 1 to 2.

It is normally preferable to first prepare the polymer latex and then add the partially condensed condensation product. However, the ingredients (the resorcinol and formaldehyde) can be added to the polymer latex in the uncondensed form and the entire condensation can then take place in situ. The latex tends to keep longer and be more stable if it is kept at an alkaline pH level.

In accordance with this invention, the polyepoxide treated cord is dipped for one to three seconds in the RFL dip and dried at a temperature within the range of 120°C to 265°C for 0.5 minutes to 4 minutes and thereafter calendered into the rubber and cured therewith. The drying step utilized will preferably be carried out by passing the cord through 2 or more drying ovens which are maintained at progressively higher temperatures. For instance, it is highly preferred to dry the cord by passing it through a first drying oven which is maintained at a temperature of 250°F (121°C) to 300°F (149°C) and then to pass it through a second oven which is maintained at a temperature which is within the range of 350°F (177°C) to 500°F (260°C). It should be appreciated that these temperatures are oven temperatures rather than the temperature of the cord being dried. The cord will preferably have a total residence time in the drying ovens which is within the range of 1 minute to 5 minutes. For example, a residence time of 30 seconds to 90 seconds in the first oven and 30 seconds to 90 seconds in the second oven could be employed.

After treatment of the polyester cord in the polyepoxide and RFL, the treated cord is incorporated into a ply layer with a rubber ply coat compound.

It is recognized that conventional compounding ingredients may be used in the preparation of the ply coat rubber composition. The ply coat, in the finished tire is sulfur cured as a component of the tire. For example, the sulfur cured ply coat rubber composition may contain conventional additives including reinforcing agents, fillers, peptizing agents, pigments, stearic acid, accelerators, sulfur-vulcanizing agents, antiozonants, antioxidants, processing oils, activators, initiators, plasticizers, waxes, pre-vulcanization inhibitors, extender oils and the like. Representative of conventional accelerators may be, for example, amines, guanidines, thioureas, thiols, thiurams, sulfenamides, dithiocarbamates and xanthates which are typically added in amounts of from 0.2 to 3 phr. Representative of sulfur-vulcanizing agents include element sulfur (free sulfur) or sulfur donating vulcanizing agents, for example, an amine disulfide, polymeric polysulfide or sulfur olefin adducts. The amount of sulfur-vulcanizing agent will vary depending on the type of rubber and particular type of sulfur-vulcanizing agent but generally range from 0.1 phr to 3 phr. Representative of the antidegradants which may be in the rubber composition include monophenols, bisphenols, thiobisphenols, polyphenols, hydroquinone derivatives, phosphites, phosphate blends, thioesters, naphthylamines, diphenol amines as well as other diaryl amine derivatives, para-phenylene diamines, quinolines and blended amines. Antidegradants are generally used in an amount ranging from 0.1 phr to 10 phr. Amine based antidegradants, however, are not preferred in the practice of this invention. Representative of a peptizing agent that may be used is pentachlorophenol which may be used in an amount ranging from 0.1 phr to 0.4 phr with a range of from 0.2 to 0.3 phr being preferred. Representative of processing oils which may be used in the rubber composition of the present invention include, for example aliphatic, naphthenic and aromatic oils. The processing oils may be used in a conventional amount ranging from 0 to 30 phr with a range of from 5 to 15 phr being more usually preferred. Initiators are generally used in a conventional amount ranging from 1 to 4 phr with a range of from 2 to 3 phr being preferred.

Accelerators may be used in a conventional amount. In cases where only a primary accelerator is used, the amounts range from 0.5 to 2 phr. In cases where combinations of two or more accelerators are used, the primary accelerator is generally used in amounts ranging from 0.5 to 1.5 phr and a secondary accelerator is used in amounts ranging from 0.1 to 0.5 phr. Combinations of accelerators have been known to produce a synergistic effect. Suitable types of conventional accelerators are amines, disulfides, guanidines, thioureas, thiazoles, thiurams, sulfenamides, dithiocarbamates and xanthates. Preferably, the primary accelerator is a sulfenamide. If a secondary accelerator is used, it is preferably a guanidine, dithiocarbamate or thiuram compound.

The invention is further illustrated by the following examples.

### EXAMPLE 1

Example 1 illustrates the effect of the cord treatment of the present invention on the adhesion of polyethylene terephthalate (PET) and polyethylene naphthenate (PEN) polyester cord to a standard sidewall insert rubber compound. Adhesive activated polyester yarns were first twisted to form polyester cords. The cords were then treated with an aqueous dispersion of a 2 percent by weight of fine particle ortho-cresol formaldehyde novolac polyepoxide resin by dipping the cord for 5 seconds, followed by drying for 60 seconds at 140°C. The cords were then treated with an RFL dip containing 30 percent by weight of SBR, 30 percent by weight of vinylpyridene-styrene-butadiene, and 6.5 percent by weight of a blocked isocyanate, by dipping the cord for 5 seconds, following by drying for 60 seconds at 140°C and finally for 60 seconds at 245°C.

Polyester cord fabric samples treated using the methods of Example 1 were tested for adhesion to a standard ply coat compounds containing standard amounts of additives and curatives. A PEN cord fabric (1100/2 10/12 TPI) and a PET cord fabric (1440/3 4.5/4.5 TPI) each was treated as described. A first control (Control 2) PET cord fabric (1100/2 10/12 TPI) was made by using adhesive activated polyester yarn treated with an RFL containing a blocked isocyanate dip. A second control (Control 4) used the same treatment on a second PET fabric (1440/3 4.5/4.5 TPI).

Adhesion test samples were prepared by a standard peel adhesion test on 1" wide specimens. Strip adhesion samples were made by plying up a layers of fabric with both sides coated with 0.30 mm rubber coat compound to make a rubberized fabric, followed by preparation of a sandwich of two layers of the rubberized fabric separated by a mylar window sheet. The sandwich was cured and 1" samples cut centered on each window in the mylar. The cured samples were then tested for adhesion between the rubberized fabrics in the area defined by the mylar window by 180 degree pull on a test apparatus. Percent rubber coverage on cord was determined by visual comparison. Parallel samples were cured using the following cure cycles: 32 minutes at 150°C, 137 minutes at 160°C, and 44 minutes at 180°C. Cured samples were then tested for adhesion at each of room temperature, 100°C and 150°C. Results of the adhesion tests are shown in Tables 1 and 2.

**Table 1**

| 1" Strip Adhesion Values, N | | |
|---|---|---|
| | | control |
| Sample | 1 | 2 |
| Fabric | PEN 1100/2 | PET 1100/2 |
| Cured 32 minutes @150°C | | |
| Room temperature | 187 | 121 |
| 100°C | 120 | 97 |
| 150°C | 101 | 53 |

| Cured 137 minutes @160°C | | |
|---|---|---|
| Room temperature | 162 | 103 |
| 100°C | 101 | 76 |
| 150°C | 70 | 53 |

| Cured 44 minutes @180°C | | |
|---|---|---|
| Room temperature | 178 | 103 |
| 100°C | 121 | 101 |
| 150°C | 82 | 61 |

**Table 2**

| 1" Strip Adhesion Values, N | | |
|---|---|---|
| | | control |
| Sample | 3 | 4 |
| Fabric | PET 1440/3 | PET 1440/3 |
| Cured 32 minutes @150°C | | |
| Room temperature | 168 | 158 |
| 100°C | 131 | 119 |
| 150°C | 92 | 76 |

| Cured 137 minutes @160°C | | |
|---|---|---|
| Room temperature | 110 | 104 |
| 100°C | 8375 | |
| 150°C | 53 | 53 |

| Cured 44 minutes @180°C | | |
|---|---|---|
| Room temperature. | 132 | 109 |
| 150°C | 58 | 56 |

As is evident from the data of Tables 1 and 2, polyester cords treated using the methods of the present invention show consistently superior adhesion to rubber compound even at high temperatures, such as those experienced during a runflat deflation episode.

### COMPARATIVE EXAMPLE 2

Comparative Example 2 illustrates polyester cords according to the invention in an OVERLAY / UNDERLAY application in Goodyear NCT5 runflat tires of size 225/50 R16. The control tire and the experimental tire 1 have the same carcass construction (rayon 2440/2 twisted 9.9/9.9 TPI).

| | Control | EXP 1 |
|---|---|---|
| | Overlay -> nylon 1400/1 4.6 TPI | Overlay -> PET 1440/2 7/9 TPI |
| | Underlay -> rayon 1840/2 10.4/10.4 TPI | Underlay -> PET 1440/2 7/9 TPI |
| Camber High Speed (4°) | 7' @240 & 0' @250 | 8' @250 & 7' @250 |
| Lab run flat (km) | 454 | 458 |
| ODR | > 80 000 km | > 80 000 km |
| Plunger (kgf.cm) | 6483 | 6668 |
| Rolling Resistance (‰) | 12.7 | 12.4 |
| Flatspot | | |
| relative peak value (N) | 215 | 166 (77%) |
| relative RFV after 6 min (N) | 117 | 98 (84 %) |
| Cornering Stiffness | | |
| Coefficient (220 kPa) | | |
| @ 4000N | 0.366 | 0.377 |
| @ 5600N | 0.339 | 0.358 |
| Ride / handling | Exp globally better than control | |

### EXAMPLE 3

Example 3 illustrates polyester cords according to the invention in a CARCASS application in Goodyear NCT5 runflat tires of size 225/50 R16. The control tire and the experimental tire 2 have the same overlay reinforcement (nylon 1400/1 twisted 4.6 TPI) and underlay (rayon 1840/2 twisted 10.4/10.4 TPI).

| | Control | EXP 1 |
|---|---|---|
| | Carcass -> rayon 2440/2 9.9/9.9 TPI | Carcass -> PET 1440/2 7/9 TPI |
| Camber High Speed (4°) | 7' @240 & 0' @250 | 4' @250 & 0' @260 |
| Lab run flat (km) | 454 | 410 |
| ODR | > 80 000 km | > 80 000 km |
| Plunger (kgf.cm) | 6483 | 6308 |
| Rolling Resistance (‰) | 12.7 | 12.5 |
| Flatspot | | |
| relative peak value (N) | 215 | 185 (86 %) |
| relative RFV after 6 min (N) | 117 | 83 (71 %) |
| Cornering Stiffness Coefficient (220 kPa) | | |
| @ 4000N | 0.366 | 0.372 |
| @ 5600N | 0.339 | 0.343 |
| Ride / handling | Exp globally better than control | |

## Claims

1. A pneumatic radial runflat tire having a tread (12), a belt structure (14) comprising at least two belt plies (24, 26) and a carcass (21) comprising two sidewalls (16, 18), two beads (36a, 36b) at least one radial carcass ply (22) and at least one wedge insert (42a, 42b) in each sidewall (16, 18), wherein at least one of the reinforcing elements in the carcass reinforcing plies of the tire (10) includes one or more reinforcing cords of polyester formed by twisting together a plurality of polyester yarns and treating the twisted polyester yarns with an aqueous emulsion comprising a polyepoxide, wherein the polyester is PEN or PET.

2. The tire of claim 1 further comprising an underlay disposed between the carcass (21) and the belt structure (14).

3. The tire of claim 1 or 2 further comprising an overlay (28) disposed between the tread (12) and the belt structure (14).

4. The tire of claim 1 with the cords of polyester being obtained by treating the cord with an aqueous resorcinol-formaldehyde-latex (RFL) emulsion after the treatment with the aqueous emulsion.

5. The tire of claim 4 wherein the aqueous RFL emulsion comprises a resorcinol-formaldehyde resin, a styrene-butadiene copolymer latex, a vinylpyridine-styrene-butadiene terpolymer latex, and a blocked isocyanate.

6. The tire of claim 1 wherein the polyepoxide is selected from the group consisting of reaction products between an aliphatic polyalcohol and a halohydrin, reaction products between an aromatic polyalcohol and a halohydrin, and reaction products between a novolac phenolic resin or a novolac resorcinol resin and a halohydrin or wherein the polyepoxide is derived from an ortho-cresol formaldehyde novolac resin.

7. The tire of claim 1 wherein the polyepoxide is present in the aqueous emulsion in a concentration range of from 1 to 5 percent by weight, preferably of from 1 to 3 percent by weight.

8. The tire of claim 5 wherein the blocked isocyanate is a reaction product between one or more isocyanates and one or more blocking agents, wherein the isocyanates are selected from the group consisting of monoisocyanates, diisocyanates and triisocyanates; and wherein the blocking agents are selected from the group consisting of phenols, tertiary alcohols, aromatic amines, ethyleneimines, imides, lactams, ureas, oximes, and α-pyrolidone.

9. The tire of claim 5 the blocked isocyanate is present in the RFL emulsion in a concentration range of from 1 to 8 parts by weight of solids.

10. The tire of claim 1 wherein the polyepoxide is present on the polyester cord in a range of from 0.3 to 0.7 percent by weight, preferably in a range of from 0.4 to 0.6 percent by weight.

## Patentansprüche

1. Radial-Luftreifen mit Notlaufeigenschaften, mit einer Lauffläche (12), einer Gürtelstruktur (14), die mindestens zwei Gürtellagen (24, 26) umfasst, und einer Karkasse (21), die zwei Seitenwände (16, 18), zwei Wülste (36a, 36b), mindestens eine radiale Karkassenlage (22) und mindestens einen Keileinsatz (42a, 42b) in jeder Seitenwand (16, 18) umfasst, wobei mindestens eines der Verstärkungselemente in den Karkassenverstärkungslagen des Reifens (10) einen oder mehrere Verstärkungskorde aus Polyester beinhaltet, die durch Miteinanderverdrillen einer Vielzahl von Polyestergarnen und Behandeln der verdrillten Polyestergarne mit einer ein Polyepoxid enthaltenden wässrigen Emulsion gebildet sind, wobei das Polyester PEN oder PET ist.

2. Reifen nach Anspruch 1, weiter eine zwischen der Karkasse (21) und der Gürtelstruktur (14) angeordnete Unterlage umfassend.

3. Reifen nach Anspruch 1 oder 2, weiter eine zwischen der Lauffläche (12) und der Gürtelstruktur (14) angeordnete Auflage (28) umfassend.

4. Reifen nach Anspruch 1, wobei die Polyesterkorde durch Behandeln des Kords mit einer wässrigen Resorcinol-Formaldehyd-Latex(RFL)-Emulsion nach der Behandlung mit der wässrigen Emulsion erhalten sind.

5. Reifen nach Anspruch 4, wobei die wässrige RFL-Emulsion ein Resorcinol-Formaldehyd-Harz, ein Styrol-Butadien-Copolymer-Latex, ein Vinylpyridin-Styrol-Butadien-Terpolymer-Latex und ein blockiertes Isocyanat umfasst.

6. Reifen nach Anspruch 1, wobei das Polyepoxid aus der Gruppe ausgewählt ist, bestehend aus Reaktionsprodukten zwischen einem aliphatischen Polyalkohol und einem Halohydrin, Reaktionsprodukten zwischen einem aromatischen Polyalkohol und einem Halohydrin, und Reaktionsprodukten zwischen einem Novolak-Phenolharz oder einem Novolak-Resorcinolharz und einem Halohydrin, oder wobei das Polyepoxid von einem Orthocresol-Formaldehyd-Novolakharz abgeleitet ist.

7. Reifen nach Anspruch 1, wobei das Polyepoxid in der wässrigen Emulsion in einem Konzentrationsbereich von 1 bis 5 Gewichtsprozent, bevorzugt von 1 bis 3 Gewichtsprozent, vorhanden ist.

8. Reifen nach Anspruch 5, wobei das blockierte Isocyanat ein Reaktionsprodukt zwischen einem oder mehreren Isocyanaten und einem oder mehreren Blockierungsmitteln ist, wobei die Isocyanate aus der aus Monoisocyanaten, Diisocyanaten und Triisocyanaten bestehenden Gruppe ausgewählt sind; und wobei die Blockierungsmittel aus der aus Phenolen, tertiären Alkoholen, aromatischen Aminen, Ethyleniminen, Imiden, Lactamen, Harnstoffen, Oximen und α-Pyrolidon bestehenden Gruppe ausgewählt sind.

9. Reifen nach Anspruch 5, wobei das blockierte Isocyanat in der RFL-Emulsion in einem Konzentrationsbereich von 1 bis 8 Gewichtsteilen an Feststoffen vorhanden ist.

10. Reifen nach Anspruch 1, wobei das Polyepoxid auf dem Polyesterkord in einem Bereich von 0,3 bis 0,7 Gewichtsprozent, bevorzugt in einem Bereich von 0,4 bis 0,6 Gewichtsprozent, vorhanden ist.

## Revendications

1. Bandage pneumatique à nappe radiale permettant de rouler à plat, possédant une bande de roulement (12), une structure de ceintures (14) comprenant au moins deux nappes de ceintures (24, 26) et une carcasse (21) comprenant deux flancs (16, 18), deux talons (36a, 36b), au moins une nappe de carcasse radiale (22) et au moins une pièce rapportée cunéiforme (42a, 42b) dans chaque flanc (16, 18), dans lequel au moins un des éléments de renforcement dans les nappes de renforcement de carcasse du bandage pneumatique (10) englobe plusieurs câblés de renforcement en polyester que l'on obtient en torsadant les uns aux autres plusieurs fils de polyester et en traitant les fils de polyester torsadés avec une émulsion aqueuse comprenant un polyépoxyde, le polyester étant du PEN ou du PET.

2. Bandage pneumatique selon la revendication 1, comprenant en outre une couche inférieure disposée entre la carcasse (21) et la structure de ceintures (14).

3. Bandage pneumatique selon la revendication 1, comprenant en outre une couche supérieure (28) disposée entre la bande de roulement (12) et la structure de ceintures (14).

4. Bandage pneumatique selon la revendication 1, dont on obtient les câblés en polyester en traitant le câblé avec une émulsion aqueuse de résorcinol-formaldéhyde-latex (RFL) après le traitement avec l'émulsion aqueuse.

5. Bandage pneumatique selon la revendication 4, dans lequel l'émulsion aqueuse RFL comprend une résine de résorcinol-formaldéhyde, un latex de copolymère de styrène-butadiène, un latex de terpolymère de vinylpyridine-styrène-butadiène et un isocyanate bloqué.

6. Bandage pneumatique selon la revendication 1, dans lequel le polyépoxyde est choisi parmi le groupe constitué par des produits réactionnels entre un alcool polyvalent aliphatique et une halogénhydrine, des produits réactionnels entre un alcool polyvalent aromatique et une halogénhydrine, et des produits réactionnels entre une résine phénolique de novolaque ou une résine de résorcinol de novolaque et une halogénhydrine, ou bien dans lequel le polyépoxyde dérive d'une résine de novolaque d'ortho-crésol formaldéhyde.

7. Bandage pneumatique selon la revendication 1, dans lequel le polyépoxyde est présent dans l'émulsion aqueuse dans une plage de concentrations de 1 à 5 % en poids, de préférence de 1 à 3 % en poids.

8. Bandage pneumatique selon la revendication 5, dans lequel l'isocyanate bloqué est un produit réactionnel entre un ou plusieurs isocyanates et un ou plusieurs agents de blocage, les isocyanates étant choisis parmi le groupe constitué par des monoisocyanates, des diisocyanates et des triisocyanates, et dans lequel les agents de blocage sont choisis parmi le groupe constitué par des phénols, des alcools tertiaires, des amines aromatiques, des éthylène-imines, des imides, des lactames, des urées, des oximes et l'α-pyrrolidone.

9. Bandage pneumatique selon la revendication 5, dans lequel l'isocyanate bloqué est présent dans l'émulsion RFL dans une plage de concentrations de 1 à 8 parties en poids de produits solides.

10. Bandage pneumatique selon la revendication 1, dans lequel le polyépoxyde est présent sur les câblés en polyester dans la plage de 0,3 à 0,7 % en poids, de préférence dans la plage de 0,4 à 0,6 % en poids.
